# DEMANDE DE BREVET EUROPEEN

(11) **EP 2 874 106 A1**
(43) Date de publication de la demande: **20.05.2015**
(21) Numéro de dépôt: 14192333.4
(22) Date de dépôt: 07.11.2014
(51) Int. Cl.: G06Q 10/00, G06Q 50/30, G06Q 10/06, G06F 17/20, G06F 17/27

(54) **Système et procédé de diagnostic de panne aéronef**

(30) Priorité: 13.11.2013 FR 1361073
(71) Demandeur: Flightwatching, 31400 Toulouse (FR)
(72) Inventeur: Beaujard, Jean-Philippe, 31830 PLAISANCE DU TOUCH (FR); Hô Dac, Olivier, 31400 TOULOUSE (FR)
(74) Mandataire: Cornuejols, Christophe

(57) **Abrégé**

L'invention vise un système de diagnostic de panne aéronef comprenant un groupe d'au moins un dispositif mobile intelligent (103), mobile vis à vis des équipements embarqués (101 a, 101 b) d'un aéronef (100),
les équipements embarqués et dispositifs mobiles intelligents (103) communiquant entre eux, le procédé comprenant au moins une demande de données de mesure de la part d'un dispositif mobile intelligent (103) vers au moins un équipement embarqué (101a, 101b), en suivant une arborescence de données de mesures (250) à acquérir par l'ensemble des dispositifs mobiles intelligents de la part de l'ensemble des équipements embarqués,
ledit équipement embarqué (101a, 101b) émettant en réponse les données requises par le dispositif mobile intelligent (103),
une donnée reçue par un dispositif mobile intelligent (103) entraînant le passage à une étape ultérieure de l'arborescence de demandes de données de mesure,
cette arborescence de demandes de données de mesures, dite "document interactif de maintenance" (250) étant générée à partir de la documentation technique aéronef (210), en en extrayant automatiquement les inférences (230), les données à mesurer (240), et les mesures réalisables sur les équipements aéronefs (242), et celles (244) nécessitant des outillages (106) ne faisant pas partie des équipements embarqués.

## Description

La présente invention relève du domaine des systèmes et procédés de diagnostic sur aéronef.

Elle vise plus particulièrement un système comprenant un logiciel et des dispositifs mobiles intelligents adaptés à l'interrogation d'équipements aéronef et aux relevés de mesures en provenance d'outillage de maintenance.

### Préambule et art antérieur

Le contenu de la documentation de maintenance des aéronefs; notamment avions, est devenu extrêmement complexe. Elle intègre des informations diverses qui éloignent l'utilisateur du travail à faire : avertissements de sécurité, précautions au regard de la législation du travail, étapes de mise en configuration de l'aéronef, multiples mesures, étapes de test opérationnel, actions de clôture de tâche.

Près de la moitié des utilisateurs des compagnies aériennes estiment que la manière dont est présenté l'information ne correspond pas à la manière de réaliser une tache de maintenance, [CHAPARRO et al. 2002]. L'utilisateur est souvent perdu dans la complexité de la documentation malgré l'effort d'une présentation normalisée et présente des difficultés pour y repérer l'essentiel à faire.

Une erreur d'interprétation peut entrainer d'importants retards techniques engendrant des coûts financiers importants pour les compagnies aériennes. Le document de maintenance a sa part de responsabilité quand l'opérateur n'y trouve pas l'information dont il a besoin, s'il ne comprend pas l'information présentée ou s'il préfère s'en écarter volontairement.

Selon CHAPARRO et al. (2002), 62% des techniciens de maintenance ne suivent pas systématiquement les procédures de la documentation de maintenance malgré l'obligation légale. La principale raison invoquée étant que leurs propres façons de faire sont plus adaptées à la réalité du terrain.

Selon les procédures usuelles, le point d'entrée d'une recherche de panne est généralement un code ou texte d'anomalie qui apparait dans les rapports de maintenance en fin de vol d'un appareil, ou qui peut être transmis pendant le vol par l'équipage ou par des moyens automatiques de transmission de données.

La documentation de maintenance aéronef, fournie par le constructeur, permet alors aux techniciens d'identifier la tache de dépannage, associée au code ou texte.

Il apparaît une grande complexité de la structure arborescente de la documentation de maintenance et la nécessité d'effectuer un grand nombre d'étapes les unes après les autres pour identifier l'origine de la panne

Il existe par ailleurs aujourd'hui des solutions de documentation électronique qui facilitent la navigation documentaire grâce notamment à des hyperliens. Mais cela s'avère insuffisant car l'opérateur perd le fil de ce qu'il cherche en passant d'un document à l'autre. Le temps de diagnostic et donc de maintenance aéronef par les techniciens s'en trouve donc considérablement allongé. Ceci se traduit par une période d'immobilisation des aéronefs, et donc engendre une perte d'exploitation significative.

Le système et le procédé décrit dans la présente invention permettent de résoudre certains au moins de ces problèmes pour la recherche de panne sur aéronef.

### Exposé de l'invention

A cet effet, l'invention vise en premier lieu un procédé d'échange de données entre un premier groupe d'au moins un équipement embarqué d'aéronef, ledit équipement embarqué étant adapté à fournir des mesures de fonctionnement d'au moins un système d'un aéronef, et un second groupe d'au moins un dispositif mobile intelligent, mobile vis à vis des équipements d'aéronef, ledit procédé étant destiné à être mis en oeuvre dans le cadre d'une opération de maintenance à distance d'aéronef, celui-ci étant en vol.

Les équipements embarqués et dispositifs mobiles intelligents communiquent entre eux, le procédé comprenant au moins une demande de données de mesure de la part d'au moins un dispositif mobile intelligent vers au moins un équipement embarqué, en suivant une arborescence de données de mesures à acquérir par au moins un des dispositifs mobiles intelligents ou des outillages complémentaires de la part d'un ensemble d'équipements embarqués,
ledit équipement embarqué émettant en réponse les données requises par le dispositif mobile intelligent,
une donnée reçue par un dispositif mobile intelligent entraînant le passage à une étape ultérieure d'une arborescence de demandes de données de mesure.

On entend par dispositif mobile intelligent un dispositif autonome de type smartphone, tablette PC, Google glass -marque déposée- ou autre dispositif connu en anglais sous le nom générique de « smart device ». Une « smart device » est définie selon Wikipedia -marque déposée- comme un dispositif électronique, généralement connecté à d'autres dispositifs ou réseaux par différents protocoles tels que Bluetooth, NFC, WiFi, 3G, etc., qui peuvent opérer jusqu'à un certain point interactivement et de façon autonome.

Le dispositif mobile intelligent, dont il est ici question, ne fait pas partie des équipements aéronef. Il n'est donc pas certifié selon les normes s'appliquant aux équipements embarqués sur aéronef. Le dispositif mobile intelligent n'appartient pas au cockpit. Ceci représente un avantage économique car le coût du dispositif mobile intelligent est ainsi faible au regard des équipements certifiés. Un autre avantage est la possibilité d'utiliser ce dispositif mobile intelligent au sol par des opérateurs de maintenance pendant que l'aéronef est en vol.

L'arborescence de demandes de données de mesures est préalablement générée à partir de la documentation technique aéronef par transposition des procédures incluses dans ce document technique aéronef au cas d'un aéronef en vol, en en extrayant automatiquement de ce document technique aéronef les inférences, les données à mesurer, les mesures à distance et les actions distantes réalisables sur les équipements aéronefs, et celles nécessitant des outillages ne faisant pas partie des équipements embarqués,

Le procédé détecte les étapes à réaliser et les catégorise en mesures ou actions.

Certaines mesures prévues au sol peuvent être réalisées en vol mais elles doivent être transposées au contexte du vol (état de fonctionnement de l'avion, pression, température...). D'autres peuvent être déduites de l'environnement du système étudié. D'autres mesures ne peuvent pas être faites à distance ou nécessitent des outillages et l'accès à l'avion. Une intégration avec les outils logistiques de maintenance au sol permet de constituer la boite à outils nécessaire. Les actions peuvent être transposées au contexte du vol. Si l'action ne peut pas être commandée du sol, le procédé peut cependant décider d'observer l'aéronef pour valider le bon fonctionnement (La documentation peut mentionner un test de mouvement d'une surface mobile, le procédé peut décider d'attendre que l'aéronef le fasse de lui même sur certaines phases de vol dans le cas ou il n'est pas possible d'actionner la surface mobile du sol). Ainsi, nous parlerons de transposition documentaire plutôt que de transformation documentaire.

Le document interactif de maintenance comporte un ensemble de branches, chaque branche comportant au moins une étape d'acquisition d'une mesure dont le résultat doit être validé positivement ou négativement pour avancer vers une étape suivante et aboutir à un diagnostic.

Dans un mode de mise en oeuvre particulier, le procédé comporte, pour au moins une donnée de mesure demandée, une étape de vérification de ce que la donnée de mesure est conforme à une plage de valeur prédéterminée, une étape de signalisation sur au moins un dispositif mobile intelligent ou un terminal externe de suivi du résultat cette vérification.

Plus particulièrement, dans ce cas, le procédé comporte avantageusement une étape de validation, par un opérateur d'un des dispositifs mobiles intelligents ou d'un terminal externe de suivi, de la conformité ou non conformité de la donnée de mesure, et d'établissement d'un rapport de conformité.

Avantageusement, le procédé comporte une étape de passage à une branche de l'arborescence de données de mesures à acquérir tenant compte de la conformité ou non conformité de la donnée de mesure.

Dans un mode de mise en oeuvre particulier, le procédé comporte une étape de prise en compte de données de mesures obtenues antérieurement à l'opération de maintenance en cours, notamment des données obtenues par les équipements embarqués durant au moins une phase de vol.

Dans ce cas, selon un mode encore plus particulier de mise en oeuvre, le procédé comporte une étape d'enregistrement de la date de chaque donnée de mesure recueillie des équipements embarqués ou dispositifs mobiles intelligents ou autres outillages de mesure utilisés, et une validation de la donnée seulement si elle est suffisamment récente, une valeur de proximité temporelle ayant été préalablement déterminée.

Dans un mode de mise en oeuvre particulier, pour au moins un ensemble de dispositifs mobiles intelligents ou de terminaux externes de suivi dédiés à l'opération de maintenance en cours, les résultats de mesure de tous les équipements sont affichés simultanément sur ces dispositifs mobiles intelligents ou terminaux externes de suivi, au fur et à mesure de leur réception.

Dans ce cas, selon un mode encore plus particulier de mise en oeuvre, le procédé comporte une étape de génération automatique d'un rapport comportant toutes les étapes de mesures parcourues, les données recueillies, les décisions de validation ou non validation de ces mesures, les dates de ces décisions et l'identité du dispositif mobile intelligent ou du terminal externe de suivi à l'origine de la décision.

Dans un mode de mise en oeuvre particulier, le dispositif mobile intelligent émet une demande de données de mesure à au moins un équipement embarqué selon un critère de proximité dudit équipement fixe ou d'absence de données reçue de cet équipement embarqué par l'un quelconque des dispositifs mobiles intelligents depuis une durée prédéterminée.

Dans un mode particulier de réalisation, une donnée reçue par un dispositif mobile intelligent n'est pas redemandée par les autres dispositifs mobiles intelligents.

Dans une mise en oeuvre particulière, le procédé est mis en oeuvre au moins en partie alors que l'aéronef est en vol. Il est en effet extrêmement utile de pouvoir rapidement analyser une panne survenant en vol, et traiter en temps réel ce qui peut l'être, de manière à éviter de devoir ramener l'aéronef au sol, ce qui engendre des surcoûts importants.

On comprend que, dans cette situation, il n'est pas possible depuis un centre de maintenance situé au sol de tester tous les systèmes de l'aéronef, mais seulement certains de ceux-ci, équipés pour être interrogés à distance. Il est alors nécessaire d'effectuer une partie au moins de la maintenance à distance, sur la base des seules informations disponibles.

Dans cette mise en oeuvre, l'utilisation des documents de maintenance aéronef doit être interprétée en fonction des données disponibles.

Le procédé comporte alors une étape de transposition des procédures décrites en détails dans la documentation de maintenance dans le cadre d'un aéronef en vol, donc soumis à des conditions environnementales différentes de celles d'un hangar de maintenance au sol. Il s'agit notamment de supprimer de ces procédures de maintenance les phases de mesure qui ne s'appliquent pas au cas de l'aéronef en vol, et d'adapter les mesures en fonction des conditions locales. Il y a donc une tâche d'interprétation de la documentation de maintenance pour un usage potentiel en vol.

L'invention vise également un produit programme d'ordinateur (en d'autres termes un logiciel), comportant des instructions adaptées à mettre en oeuvre le procédé exposé ci-dessus.

L'invention vise sous un autre aspect un système de diagnostic de pannes d'aéronef, comprenant au moins un dispositif mobile intelligent et mettant en oeuvre un procédé tel qu'exposé.

### Présentation des figures

Les caractéristiques et avantages de l'invention seront mieux appréciés grâce à la description qui suit, description qui expose les caractéristiques de l'invention au travers d'un exemple non limitatif d'application.

La description s'appuie sur les figures annexées qui représentent :
Figure 1 : un diagramme schématique des éléments intervenant dans la mise en oeuvre de l'invention,
Figure 2 : un exemple de structure de documentation technique aéronef,
Figure 3 : un résumé des étapes du procédé de transformation d'une documentation de maintenance aéronef en document interactif pour tablette PC,
Figure 4 : un organigramme des étapes du procédé de maintenance utilisant le document interactif de maintenance,

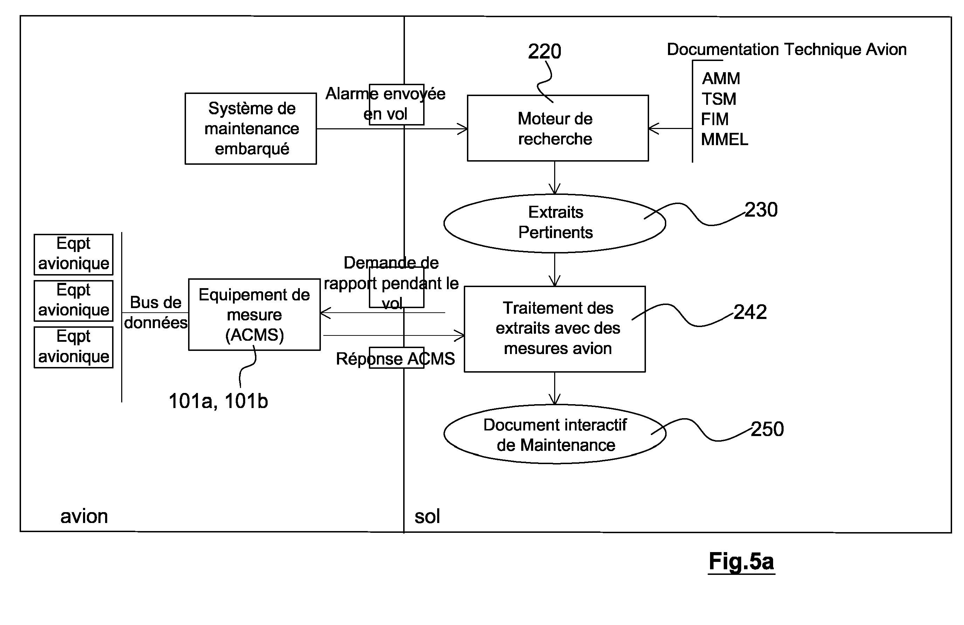

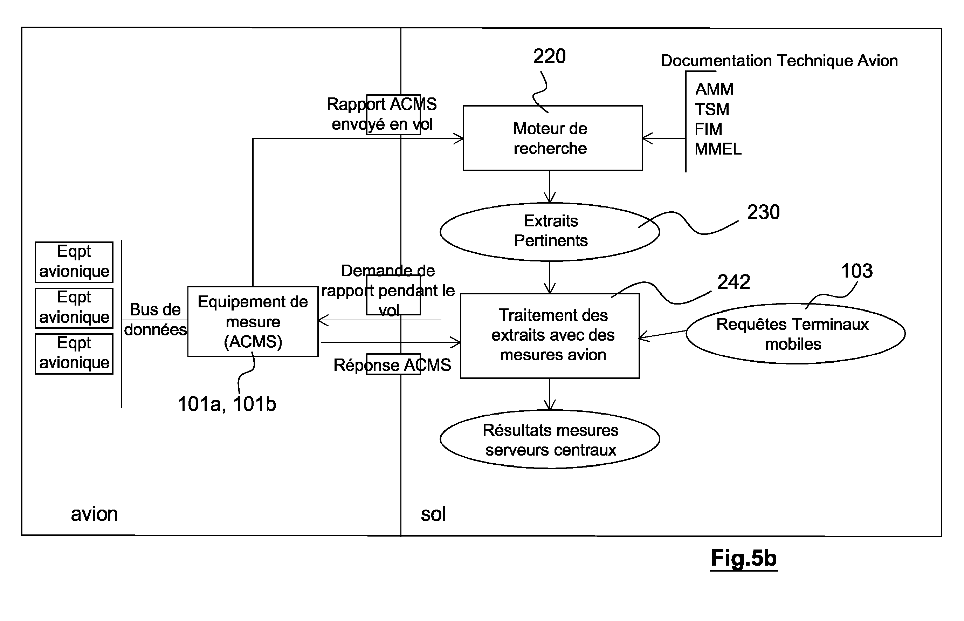

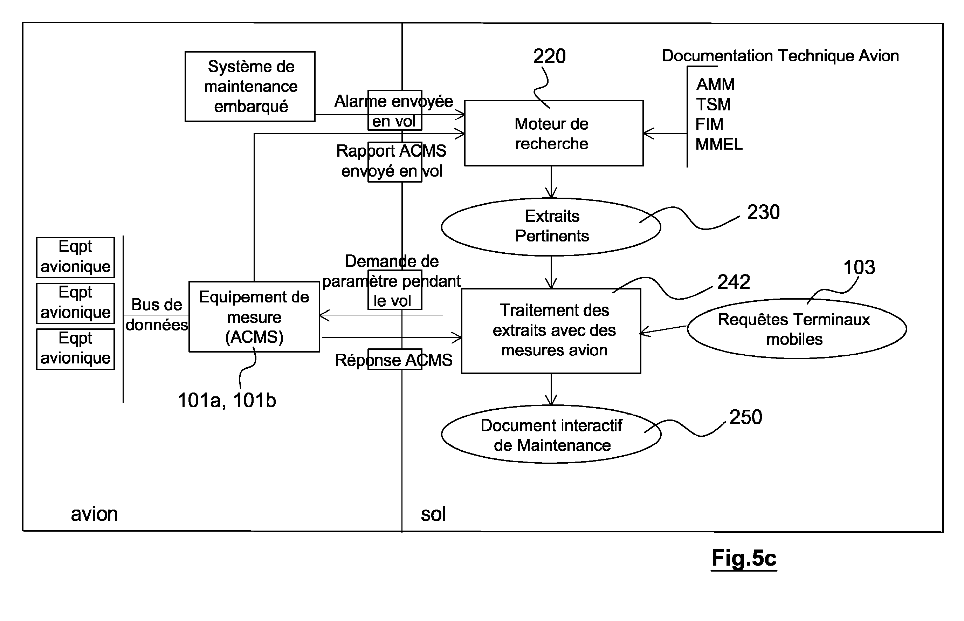

Figures 5a, 3b, 3c : un résumé des étapes (partie serveurs centraux) de mise en oeuvre du procédé de maintenance d'un aéronef utilisant le document interactif de maintenance et les alternatives,

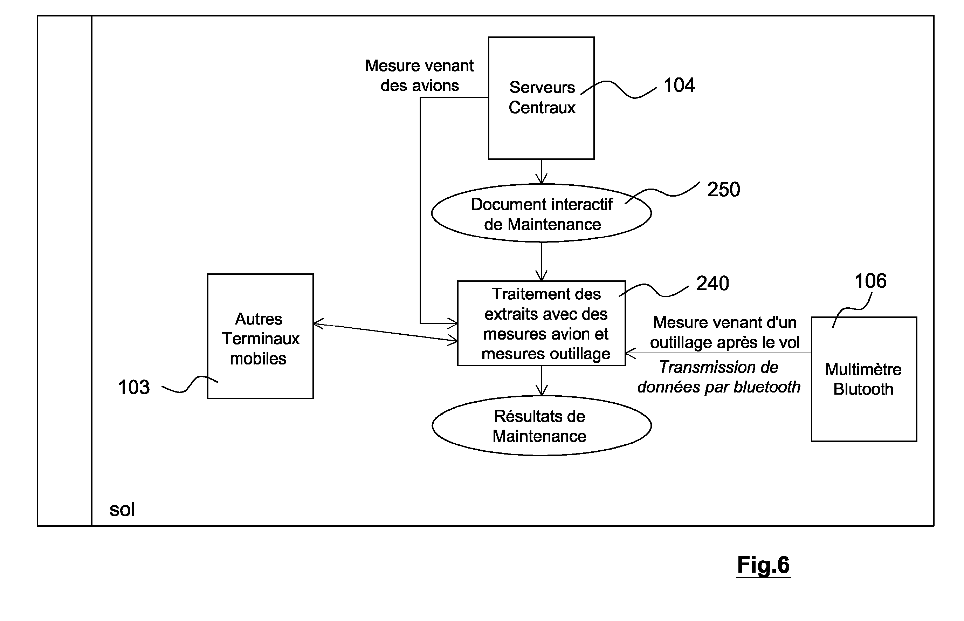

Figure 6 : un résumé des étapes (partie dispositifs mobiles intelligents) de mise en oeuvre du procédé de maintenance d'un aéronef utilisant le document interactif de maintenance et les alternatives.

### Description détaillée d'un mode de réalisation de l'invention

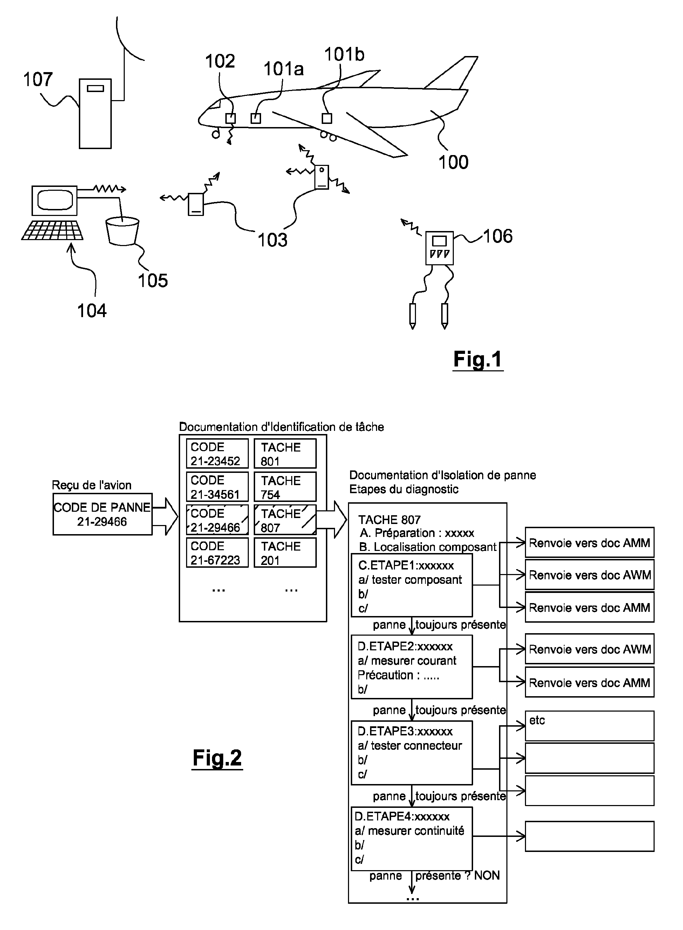

Comme on le voit sur la figure 1, l'invention trouve sa place dans le cadre de la maintenance d'un équipement tel qu'un aéronef **100,** typiquement mais non limitativement de type avion de transport commercial. Cet aéronef 100 est supposé doté d'un ensemble d'équipements de mesure embarqués **101a, 101b** etc. adaptés à acquérir des données relatives au fonctionnement d'un ensemble de systèmes aéronef tels que équipements cabine, réacteurs, générateurs etc. Ces équipements de mesure embarqués 101 a, 101 b etc. sont reliés à un réseau de communication **102,** également embarqué dans l'aéronef 100, et qui permet de transmettre les mesures au sol et de les interroger à distance. Les données sont supposées reçues par un serveur **107** au sol qui pourra les retransmettre à un serveur central **104** mettant en oeuvre le procédé associé au système de diagnostic.

Le système de diagnostic objet de la présente invention comporte en premier lieu au moins dispositif mobile intelligent **103.** Chaque dispositif mobile intelligent 103 est ici de type tablette PC, c'est-à-dire un dispositif portable léger, comportant des moyens de calcul et de mémorisation, un écran d'affichage, préférentiellement mais non obligatoirement tactile, des moyens de communication à distance avec d'autres dispositifs mobiles intelligents 103 ou un serveur central 104. Dans une variante de mise en oeuvre, ces dispositifs mobiles intelligents 103 sont des ordinateurs portables, des Smartphones à grand écran etc.

Le serveur central 104 est adapté à interroger les équipements embarqués 101 a, 101 b des aéronefs 100 ainsi que les bases de données des compagnies aériennes propriétaires desdits aéronefs, pour fournir aux utilisateurs (techniciens de maintenance) les informations suffisantes au diagnostic d'une panne. Ce serveur central 104 s'interfacent via GSM ou wifi avec les dispositifs mobiles intelligents 103 et via internet ou intranet avec des stations de travail (non illustrées sur la figure 1). Il est à noter que le système peut mettre en oeuvre plusieurs serveurs centraux 104, communiquant entre eux.

Le serveur central 104 est par exemple de type micro-ordinateur doté de moyens d'affichage, de moyens d'entrée de données, de communication avec les dispositifs mobiles intelligents 103, et de stockage de données **105.**

Le système de diagnostic met également en oeuvre, dans le présent exemple non limitatif, des outils ou outillages de maintenance **106** qui ont la particularité de communiquer leurs mesures vers les dispositifs mobiles intelligents 103 par des moyens de communication filaires ou sans fil. De tels outillage 106 comprennent par exemple un multimètre communiquant les mesures électriques effectuées via un réseau sans fil, par exemple de type bluetooth. Ces outillages de maintenance sont de type connu en soi et sortent en tant que tels du cadre de l'invention.

Le système de diagnostic objet de la présente invention comporte également, dans le présent exemple de mise en oeuvre, au moins un terminal externe de suivi **108.** Chaque terminal externe de suivi 108 est ici de type PC, comportant des moyens de calcul et de mémorisation, un écran d'affichage, des moyens de communication à distance avec les dispositifs mobiles intelligents 103 et le serveur central 104. Dans la mise en oeuvre du procédé, ces terminaux externes de suivi 108 sont destinés à être mis en oeuvre, par exemple, par des ingénieurs ou des experts externes, non directement en charge de l'opération de maintenance, mais dont les compétences peuvent être utiles à la résolution du problème.

Le procédé de maintenance tel qu'exposé ici à titre d'exemple est mis en oeuvre sous la forme d'un logiciel installé pour au moins une partie sur les dispositifs mobiles intelligents 103 ou terminaux externes de suivi 108, et pour au moins une autre partie sur le serveur central 104.

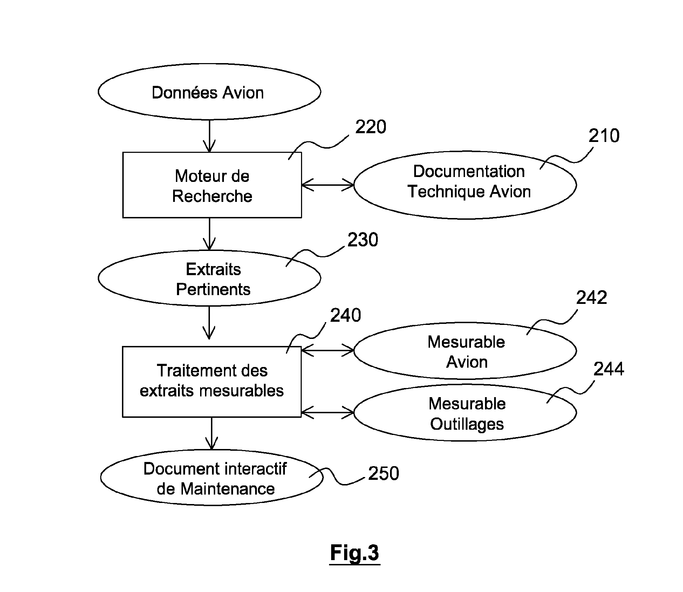

Le procédé comprend deux phases principales. Dans une première phase **200** (voir figure 3), une documentation de maintenance dite "documentation technique aéronef" **210** d'un aéronef 100 de type préalablement choisi est ségrégué en un ensemble de mesures automatiques et à distance et en un ensemble de questions réponses formant un document interactif de maintenance **250.** Une telle documentation technique aéronef 210 se présente usuellement sous la forme d'une liste des systèmes aéronef, des équipements de chaque système, de la description desdits équipements et des pannes possibles desdits équipements. Les mesures automatiques sont transposées au contexte de l'avion (sol, roulage, décollage, croisière, approche...)

La documentation technique aéronef 210 permet au technicien d'identifier la tache de dépannage, associée au code. Chaque tâche identifie une liste d'actions à effectuer, les unes après les autres, pour isoler le composant qui doit être replacé/réparé. Les étapes de diagnostic sont découpées dans de multiples chapitres différents du manuel dans lequel le lecteur doit « naviguer » et il n'est pas rare que le technicien perde la notion de ce qu'il recherche. La figure 2 illustre la structure de la documentation technique aéronef 210, dans le cas particulier d'une panne d'un sous-équipement, et met en évidence la complexité de la structure de cette documentation et la nécessité d'effectuer les étapes les unes après les autres pour identifier l'origine de la panne.

Comme on le voit sur cette figure, lorsqu'un code de panne est reçu d'un aéronef de type donné, une documentation d'identification de tâche fournit pour chaque code de panne la tâche à accomplir, cette tâche comportant une succession d'étapes de mesures à effectuer pour identifier le composant fautif. Cette liste de mesures à acquérir est fournie dans une documentation d'isolation de panne, qui fournit par exemple pour une panne donnée, la localisation du composant considéré, les précautions à envisager, puis des étapes successives, par exemple une première tâche de test de composant, une seconde tâche de mesure de courant, une troisième tâche de test de connecteur etc. Chacune de ces tâches comporte éventuellement des précautions particulières. Chacune des étapes ou précautions renvoie vers des instructions, détaillées dans un des documents listant toutes les actions de maintenance.

D'un autre côté, le document interactif de maintenance 250 est destiné à être disponible sous forme d'une arborescence logique de mesures complétées de précautions adaptées, de valeurs limites normales etc.

Les questions du document interactif de maintenance 250, sont celles usuellement posées par des techniciens de maintenance de l'aéronautique pour établir le diagnostic d'une panne donnée. Dans un exemple non limitatif de chemin de diagnostic : Quel schéma d'ensemble me sera utile ? Quels composants peuvent être en panne ? Comment identifier l'origine de la panne ? Comment démonter le composant ? Quels sont les outils nécessaires au démontage ? Comment tester le composant ? ...

La documentation technique aéronef 210 est numérisée, puis analysée par un moteur de recherche **220.** On appelle ici moteur de recherche un logiciel effectuant une série de recherches de mots clés ou de combinaison logiques de mots clés dans la documentation technique aéronef 210.

Le moteur de recherche 220 utilise des techniques d'analyse syntaxique et sémantique des textes de la documentation technique aéronef 210 qui se caractérisent par une utilisation intensive des outils de TAL (traitement automatique du langage), comportant par exemple mais non limitativement l'analyse syntaxique, la désambiguïsation sémantique, la recherche des référents des anaphores, la détection des métaphores, la prise en compte des converses, le repérage des entités nommées, l'analyse conceptuelle et thématique

Dans un premier temps, on isole et retire toutes les étapes qui peuvent être faites automatiquement et à distance sur l'aéronef, qu'il soit en vol ou au sol. Elles sont retirées du document interactif de maintenance 250 et apparaissent comme des mesures ou actions déjà réalisées automatiquement.

Ensuite on identifie dans le document les outillages et les matériaux qui sont nécessaires à la tache de maintenance. L'idée est d'analyser les outillages et matériaux qui ne sont pas standards (c'est à dire ne faisant pas partie des boites à outils du mécanicien). Ces outils et matériaux sont mis en valeur dans le document interactif de maintenance 250 avec par exemple une couleur dédiée. Cette référence est répétée toujours avec la même couleur dans les diverses tâches du document interactif de maintenance 250 faisant appel à ces outillages et matériaux. Une image peut être associée dans le document interactif de maintenance 250 à chaque outillage ou matériau de manière à éclairer plus facilement l'operateur sur le repérage des outils/matériaux à utiliser

Ensuite, dans une mise en oeuvre particulière, on analyse l'ensemble des schémas qui interviennent dans la réalisation de la tache de maintenance. Sur ces schémas il y a des références : soit des petits composants, tels que par exemple des boulons des vis avec des numéros, soit des pièces, avec des références. L'idée est d'identifier où interviennent ces références et l'utilisation de ces composants dans chaque phrase de la tache de maintenance. Si des mesures ou actions ont été effectuées pendant une phase de vol, le schéma est modifié pour faire apparaître clairement la différence de contexte (trains d'atterrissage rentrés, moteurs tournant, altitude...)

De cette manière, quand on présente la tache de maintenance sous la forme d'une check-list avec une succession d'étapes: dans chaque étape si il y a l'utilisation d'un de ces composants, la figure est recopiée. Ainsi, quand un opérateur (technicien) lit l'étape, la check-list répète la figure juste en dessous. Il n ya pas besoin d'aller chercher la figure tout en bas du texte comme on le voit habituellement dans une tache de maintenance ou la figure n'est présentée qu'une fois. L'idée est de répéter la figure autant de fois que nécessaire pour que, quand un opérateur réalise une étape de la check-list, il dispose de la figure associée

Ensuite on analyse le document de maintenance pour identifier les items qui sont liés à la sécurité de l'opérateur au sol (le mécanicien). Cette analyse peut se faire via des techniques de TAL. Dans cet exemple non limitatif, ces items sont identifiés de manière à pouvoir les afficher de manière spécifique dans le document interactif de maintenance 250 : plus spécifiquement, sous forme d'un seul message de type « pop up » regroupant l'ensemble des items liés à la sécurité pour cette tache. Ainsi l'utilisateur est obligé de lire le « pop up » de sécurité et acceptera ces conditions en cliquant sur un bouton par exemple de type « I AGREE ».

De la même manière, les éléments du document interactif de maintenance 250 liés à des risques de dommage sur avion sont analysés pour être présentés sous la forme d'un message de type « pop up » unique pour être accepté et lu par l'operateur de maintenance. Cette analyse pourra se faire via des techniques de TAL

Les étapes optionnelles sont également identifiées dans le document de maintenance de manière à ce que elles puissent être apparaître de manière différenciées dans le document interactif de maintenance 250.

Le document de maintenance est analysé pour découper l'ensemble de la tache de maintenance décrite dans le document en un ensemble d'étapes du document interactif de maintenance 250. Chaque étape correspond à une étape physique à réaliser.

Les étapes de maintenance sont analysées pour leur donner un titre qui apparaît dans une check-list. Ce titre ne correspond pas à l'action de maintenance à faire mais l'action réalisée une fois terminée. Par exemple l'installation d'un outillage de type JACK correspond à une étape mais le résumé de l'étape sera « JACK INSTALLED ». Ces étapes d'analyse peuvent être réalisées via des techniques de TAL

Enfin, pour chaque étape, on analyse les actions qui peuvent faire l'objet d'une mesure.

Cette analyse réalisée par le moteur de recherche 220 identifie divers types d'éléments utiles à l'action de maintenance afin de les rendre utilisables sous la forme d'une check-list :
- avertissements de sécurité,
- précautions au regard de la législation du travail,
- tâches de préparation,
- tâches d'exécution,
- tâches qui peuvent faire l'objet d'une mesure à distance,
- schémas,
- animations,
- étapes de contrôle
- etc.

Des éléments susceptibles de permettre un diagnostic de panne aéronef sont ainsi extraits de la documentation technique aéronef 210, et sont nommés dans la suite de la description **extraits pertinents 230.** Typiquement, les sommaires et autres parties génériques de la documentation technique aéronef sont considérés comme non pertinents pour la génération d'une liste arborescente de mesures ou tests à effectuer formant le document interactif de maintenance 250 à générer.

Les éléments pertinents 230 extraits par le moteur de recherche prennent par exemple la forme de références d'outillages non standards nécessaires à la réalisation de la tache, phrases ou extraits de phrases demandant le démontage d'un composant, les phrases ou extraits de phrases de nettoyage. L'intégration à un système d'information sol permet de localiser/identifier ces outillages pour que le mécanicien puisse constituer sa boite à outils.

Ils forment une liste ordonnée d'étapes à suivre par l'opérateur.

L'étape suivante consiste à analyser les extraits pertinents 230 pour en tirer les éléments qui peuvent faire l'objet d'une mesure (notés "Traitement des extraits mesurables" 240 sur la figure 3). Il s'agit d'identifier les éléments mesurables au moyens d'outillages de maintenance non connectés ou d'outillages connectés du type 106, ces éléments étant dites "mesurables outillages" **244,** mais aussi des éléments mesurables dit "mesurables aéronef" **242** via les équipements de mesures embarqués 101 a, 101 b qui peuvent être transmis directement au sol via l'interface de communication 102, notamment pendant un vol.

Ensuite il s'agit d'identifier, via une recherche documentaire, les conditions initiales (historique du vol), s'il y a des mesures à effectuer, et identifier les valeurs attendues selon les documentations du constructeur (incluant la documentation technique aéronef 210). Les éléments à déterminer comprennent donc notamment :
- les mesures à acquérir pour valider ces cas de pannes,
- les équipements embarqués concernés par les mesures à acquérir pour discriminer entre ces cas de pannes,
- les adresses réseau de ces équipements embarqués pour une interrogation à distance, etc.
- transposition des procédures dans le cadre d'un aéronef en vol

La transposition des procédures est effectuée en appliquant la méthodologie suivante :
Chaque extrait mesurable 240 est trié par catégorie. En effet, les étapes de maintenance qui font l'objet d'une mesure peuvent être de différentes catégories. La liste des catégories est décrite ci dessous (non limitative) :
   Vérification électronique d'un capteur, test des états stables d'un composant, tests de transition de mouvement d'un composant, mesure directe d'une valeur, vérification de fuite (« leak check »), test d'un calculateur électronique, mesure électrique, test de configuration, ...

A chaque catégorie, on transpose une procédure dédié à l'analyse en vol avec les paramètres observables.

Quelques exemples :

### Vérification électronique d'un capteur

→ transposé en « mesures du paramètre observable et vérifications que les variations des valeurs reçues sont cohérentes avec la physique de la mesure. *Exemple : mesures de pression d'air dans un circuit pendant le vol pour vérifier que les variations correspondent à des comportements physiques possibles de l'air dans un circuit.*

### Test des états stables

→ transposé en « mesure de position ou mesure d'un état si le paramètre est observable. Si non observable, un estimateur basé sur d'autres paramètres observables peuvent déduire la position ou l'état.

Certaines catégories ne peuvent pas faire l'objet d'une transposition. Dans ce cas les extraits mesurables s y attachant ne peuvent être réalisés pendnat le vol mais seulement au sol.

Cette phase 200 est typiquement mise en oeuvre sur un ordinateur de type PC et elle est intégrée dans un outil de production de la présente invention. Cette phase 200 peut être réalisée de façon préliminaire à la phase de maintenance d'aéronef proprement dite. Elle peut également être réalisée ou actualisée partiellement en temps réel. C'est notamment le cas lorsque la documentation technique avion 210 est modifiée, ce qui est régulièrement le cas.

Cette phase 200 consiste donc à remplacer les dizaines de milliers de pages que constitue la documentation de maintenance technique aéronef 210 en une liste de mesures à effectuer, présentée sous la forme d'une arborescence de check-lists (appelée document interactif de maintenance 250 dans la suite de la description).

### Exemple de transposition concernant les avions de plus de cent places.

Par exemple, lorsqu'une valve d'un circuit de pression d'air présente une anomalie, la documentation de maintenance de l'aéronef demande généralement trois branches de mesures au sol :
1. un TEST de MOUVEMENT de la valve au sol pour l'activer et vérifier qu'elle n'est pas dans une position bloquée
2. un « Leak Check » (vérification de fuite) en badigeonnant la valve d'un produit marqueur pour détecter des traces quant le circuit est mis sous pression.
3. une vérification du CAPTEUR sera vérifiée avec une mesure de continuité électrique aux bornes du capteur, puis avec son câblage.

Dans le cadre d'une analyse effectuée au sol alors que l'avion est en vol, les données disponibles sont:
- la position ouverte ou fermée
- la pression d'air mesurée par la valve.

Les procédures d'investigation doivent donc être transposées en utilisant ces deux données :
- le test de MOUVEMENT de la valve sera vérifié en plusieurs étapes en vérifiant que différentes positions de la valve sont mesurées à distance en fonction des différentes étapes du vol (croisière, atterrissage, parking, ...)
- le « LEAK CHECK » sera transposé en comparant les pressions de la valve coté gauche de l'avion avec les pressions mesurées de la valve coté droit de l'avion (tous les aéronefs ont une architecture symétrique entre la partie droite et la partie gauche). Une différence confirmée pendant le vol indique une fuite.
- la vérification de CAPTEUR ne pourra être que partiellement vérifiée en vol : en observant les variations de valeurs de pression en vol et en vérifiant que ces variations correspondent à des comportements physiques de l'air dans un circuit. En effet, des variations brutales sont le signe d'un problème au niveau du capteur ou de son câblage car l'air ne peut se comporter avec tant de gradient de pression.

### Autres transpositions

Concernant les actions (tests de mouvement, etc.) on peut imaginer qu'il soit possible de les réaliser à distance (drones). En plus des mesures à distance, nous voulons parler d'actions à distance.

Il est à noter ici que nous ne parlons pas que d'extraits mesurables (240), mais :
∘ de mesures
   effectuables à distance
   pouvant être déduites à distance
   ne pouvant être faites qu'au sol
∘ d'actions
   effectuables à distance (drones)
   effectuables au sol uniquement
   observables de manière passive depuis le sol

Puis, dans une seconde phase **300,** le document interactif de maintenance 250, créé lors de la première phase, est utilisé pour la maintenance d'un aéronef, par exemple entre deux vols.

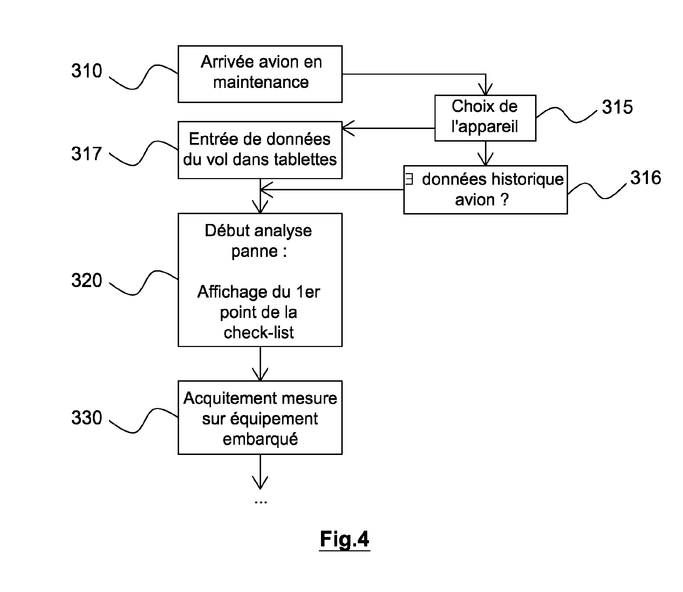

La figure 4 illustre alors des étapes de réalisation de cette phase 300.

Dans une première étape **310,** un aéronef 100 arrive en maintenance entre deux vols. On suppose qu'il s'agit d'un aéronef dont la documentation de maintenance a été préalablement traitée par la phase 200 du procédé.

Dans une étape **315,** le document interactif de maintenance de ce modèle d'aéronef est chargé dans les logiciels d'un ensemble de dispositifs mobiles intelligents 103 de maintenance affectés à la maintenance de cet aéronef 100. Ce chargement est effectué par le serveur central 104.

Dans une étape **316,** s'il existe des données historiques de maintenance de cet exemplaire de ce modèle d'aéronef 100, les données utiles à la maintenance sont également chargées dans les dispositifs mobiles intelligents 103.

De même, dans une étape **317,** si des mesures ont été transmises par des équipements embarqués 101 a, 101 b depuis la dernière maintenance, elles sont également transmises aux dispositifs mobiles intelligents 103 de maintenance. De la sorte, le procédé permet la prise en compte de données de mesures obtenues antérieurement à l'opération de maintenance en cours, notamment des données obtenues par les équipements embarqués 101 a, 101 b durant au moins une phase de vol.

Puis, dans une étape **320,** un technicien, au pied de l'aéronef 100, entame le diagnostic de maintenance proprement dit, en démarrant le document interactif de maintenance 250 sur son dispositif mobile intelligent 103. Dans une mise en oeuvre particulière, le document interactif de maintenance 250 est affiché à l'opérateur sous la forme d'une check-list. Un premier point de check-list est alors affiché sur l'écran de son dispositif mobile intelligent 103, prenant en compte les mesures acquises en vol et l'historique de l'aéronef 100.

Exemple de check-list :
- [Accepté]...........: DANGER : Haute Pression Hydraulique
- [Accepté]...........: AVERTISSEMENT : Dépose équipement 25Kg
- [OK].................: PRESSION PNEUS CORRRECTS
- [ ]..................: EQUIPEMENT BCM déposé
- [ ]..................: TEST BITE BCM PRESSION effectué

Dans l'exemple de check-list ci dessus : l'opérateur a accepté les consignes de sécurité et de législation du travail. La mesure des pressions PNEUS a été réalisée et elle est correcte. Il reste à réaliser les deux dernières tâches.

La présente invention intègre des fonctions de communication collaboratives qui permettent à plusieurs techniciens, voire à des ingénieurs et experts extérieurs, non présents sur les lieux de parking de l'aéronef, de contribuer à une même tache de maintenance. Ces ingénieurs et experts extérieurs suivent l'évolution de la tâche de maintenance sur leurs terminaux externes de suivi 108, et peuvent intervenir pour valider ou non une valeur de mesure reçue.

Dans une étape **330,** le serveur central 104, ou l'un des dispositifs mobiles intelligents 103, interagit avec des équipements embarqués 101 a, 101 b, avec des outillages de mesure 106 mis en oeuvre par des techniciens de maintenance, ou avec l'aéronef 100, pour acquérir les relevés et ainsi faciliter le diagnostic le travail du technicien. Des techniciens peuvent ainsi relever des télémesures sur des équipements embarqués 101 a, 101 b sans intervention directe sur l'aéronef 100.

Un signal sonore émis par un dispositif mobile intelligent 103 permet d'indiquer au technicien que la mesure reçue est conforme à ce qui est attendu par le document interactif de maintenance 250.

Selon les résultats des mesures acquises, le document interactif de maintenance 250 guide les techniciens vers la panne qui a causé des anomalies éventuelles de mesure, et permet la maintenance effective de l'aéronef 100.

A cet effet, le procédé comporte, pour chaque donnée de mesure demandée, des étapes suivantes :
- une étape de vérification de ce que la donnée de mesure reçue est conforme à une plage de valeur prédéterminée,
- une étape de signalisation sur au moins un dispositif mobile intelligent 103 ou un terminal externe de suivi 108 du résultat cette vérification. Dans le présent exemple non limitatif de réalisation, les résultats de mesure de tous les équipements 101 a, 101b, 106 sont affichés simultanément sur les dispositifs mobiles intelligents 103 ou terminaux externes de suivi 108, au fur et à mesure de leur réception, pour l'ensemble de dispositifs mobiles intelligents 103 ou de terminaux externes de suivi 108 dédiés à l'opération de maintenance en cours,
- une étape de validation, par un opérateur d'un des dispositifs mobiles intelligents 103 ou d'un terminal externe de suivi 108, de la conformité ou non conformité de la donnée de mesure, et d'établissement d'un rapport de conformité,
- une étape de passage à une branche de l'arborescence de données de mesures à acquérir tenant compte de la conformité ou non conformité de la donnée de mesure.

En fin de tâche de maintenance, le procédé comporte la génération automatique d'un rapport comportant toutes les étapes de mesures parcourues, les données recueillies, les décisions de validation ou non validation de ces mesures, les dates de ces décisions et l'identité du dispositif mobile intelligent 103 ou du terminal externe de suivi 108 à l'origine de la décision.

### Avantages

Le système et le procédé décrit dans la présente invention permettent de résoudre ces problèmes pour la recherche de panne parce qu'il remplace la documentation d'origine contenant des milliers de pages par une série de check-lists simplifiées.

La présente invention porte sur les tâches d'isolation de pannes : celles qui contiennent l'ensemble des mesures à effectuer afin d'identifier quel composant doit être remplacé ou réparé.

La présente invention permet de disposer de l'information utile sous la forme d'une liste d'actions très simple et pratique d'utilisation.

Le procédé met en oeuvre une implémentation sur dispositif mobile intelligent 103 qui permet de disposer à la fois d'un outil de mesure et d'étapes de maintenance à exécuter conformément aux consignes du constructeur.

Il est adapté à un travail au pied de l'aéronef 100 et permet à un mécanicien de lire la procédure à appliquer pour dépanner l'aéronef 100 tout en analysant l'état des systèmes 101 a, 101b via des télémesures réalisées sans intervention directe. Les télémesures peuvent avoir eu lieu avant le début de la tâche du mécanicien, pendant le vol précédent, par exemple. Dans ce cas, les mesures lui apparaissent transformées, comme s'il les avait faites avion au sol. Par exemple, si une mesure prend la pression des pneus de l'avion pendant le vol, la pression représentée n'est pas cette valeur directement, mais la valeur ramené à une pression du pneu à température sol, pression sol, et supportant le poids de l'avion.

Le système tel que décrit permet également à un mécanicien d'effectuer les visites d'avant vol en suivant, sur le dispositif mobile intelligent 103, les étapes demandées dont certaines donnent directement un résultat par télémesure d'un équipement embarqué 101 a, 101 b (une pression de pneu trop basse par exemple).

Le système suit et enregistre toutes les opérations réalisées en temps réel. Il permet la création d'un rapport également en temps réel. La liste des actions de maintenance à mener est générée de façon automatique, ainsi que la liste de tâches de chaque technicien de maintenance. Les résultats des actions de diagnostic et de maintenance sont visibles en temps réel, ce qui permet de suivre les risques de retard lié à la maintenance, et le temps pendant lequel l'aéronef sera bloqué eu sol. Par ailleurs, le système permet d'intégrer des experts externes dans le processus de diagnostic en leur fournissant en temps réel les données de mesure reçues, et en leur permettant d'entrer des demandes de données complémentaires, directement affichables sur les dispositifs mobiles intelligents des opérateurs. Le système permet donc de générer des connections entre les techniciens de maintenance, les ingénieurs et les experts autour d'une tâche de maintenance aéronef. Il permet éventuellement de remplacer le rapport d'intervention papier par un rapport purement électronique, directement fourni en fin de procédure de maintenance.

### Variantes

Dans une variante de mise en oeuvre, un ingénieur peut, depuis une station de travail dans son bureau, venir en support d'un cas de panne difficile en ajoutant à la documentation interactive de maintenance des schémas complémentaires utiles à l'analyse de panne.

## Revendications

1. Procédé d'échange de données entre un premier groupe d'au moins un équipement embarqué d'aéronef (100), ledit équipement embarqué (101 a, 101b) étant adapté à fournir des mesures de fonctionnement d'au moins un système d'un aéronef, et un second groupe d'au moins un dispositif mobile intelligent (103), mobile vis à vis des équipements embarqués, ledit procédé étant destiné à être mis en oeuvre dans le cadre d'une opération de maintenance à distance de l'aéronef (100), celui-ci étant en vol,
les équipements embarqués (101 a, 101b) et dispositifs mobiles intelligents (103) communiquant entre eux, le procédé comprenant au moins une demande de données de mesure de la part d'au moins un dispositif mobile intelligent (103) vers au moins au moins un équipement embarqué (101 a, 101b), en suivant une arborescence de données de mesures (250) à acquérir par au moins un des dispositifs mobiles intelligents (103) ou des outillages complémentaires (106) de la part d'un ensemble d'équipements embarqués (101a, 101b),
ledit équipement embarqué (101a, 101b) émettant en réponse les données requises par le dispositif mobile intelligent (103),
une donnée reçue par un dispositif mobile intelligent (103) entraînant le passage à une étape ultérieure de l'arborescence de demandes de données de mesure,
cette arborescence de demandes de données de mesures, dite "document interactif de maintenance" (250) étant générée à partir de la documentation technique aéronef (210), par transposition des procédures incluses dans ce document technique aéronef au cas d'un aéronef en vol, en en extrayant automatiquement de ce document technique aéronef les inférences (230), les données à mesurer (240), les mesures à distance et les actions distantes réalisables sur les équipements aéronefs (242), et celles (244) nécessitant des outillages (106) ne faisant pas partie des équipements embarqués,
ce document interactif de maintenance (250) comportant un ensemble de branches, chaque branche comportant au moins une étape d'acquisition d'une mesure dont le résultat doit être validé positivement ou négativement pour avancer vers une étape suivante et aboutir à un diagnostic.

2. Procédé selon la revendication 1, **caractérisé en ce qu'**il comporte, pour au moins une donnée de mesure demandée, une étape de vérification de ce que la donnée de mesure est conforme à une plage de valeur prédéterminée, une étape de signalisation sur au moins un dispositif mobile intelligent (103) ou un terminal externe de suivi (108) du résultat cette vérification.

3. Procédé selon la revendication 2, **caractérisé en ce qu'**il comporte une étape de validation, par un opérateur d'un des dispositifs mobiles intelligents (103) ou d'un terminal externe de suivi (108), de la conformité ou non conformité de la donnée de mesure, et d'établissement d'un rapport de conformité.

4. Procédé selon la revendication 3, **caractérisé en ce qu'**il comporte une étape de passage à une branche de l'arborescence de données de mesures à acquérir tenant compte de la conformité ou non conformité de la donnée de mesure.

5. Procédé selon l'une quelconque des revendications 1 à 4, **caractérisé en ce qu'**il comporte une étape de prise en compte de données de mesures obtenues antérieurement à l'opération de maintenance en cours, notamment des données obtenues par les équipements embarqués (101 a, 101 b) durant au moins une phase de vol.

6. Procédé selon la revendication 5, **caractérisé en ce qu'**il comporte une étape d'enregistrement de la date de chaque donnée de mesure recueillie des équipements embarqués (101 a, 101 b) ou dispositifs mobiles intelligents (103) ou autres outillages de mesure (106) utilisés, et une validation de la donnée seulement si elle est suffisamment récente, une valeur de proximité temporelle ayant été préalablement déterminée.

7. Procédé selon l'une quelconque des revendications 1 à 6, **caractérisé en ce que**, pour au moins un ensemble de dispositifs mobiles intelligents (103) ou de terminaux externes de suivi (108) dédiés à l'opération de maintenance en cours, les résultats de mesure de tous les équipements (101 a, 101b, 106) sont affichés simultanément sur ces dispositifs mobiles intelligents (103) ou terminaux externes de suivi (108), au fur et à mesure de leur réception.

8. Procédé selon la revendication 7, **caractérisé en ce qu'**il comporte une étape de génération automatique d'un rapport comportant toutes les étapes de mesures parcourues, les données recueillies, les décisions de validation ou non validation de ces mesures, les dates de ces décisions et l'identité du dispositif mobile intelligent (103) ou du terminal externe de suivi (108) à l'origine de la décision.

9. Produit programme d'ordinateur, **caractérisé en ce qu'**il comporte des instructions adaptées à mettre en oeuvre le procédé selon l'une quelconque des revendications 1 à 8.

10. Système de diagnostic de pannes d'aéronef, comprenant au moins un dispositif mobile intelligent (103) et mettant en oeuvre un procédé selon l'une quelconque des revendications 1 à 8.
